(19) **Europäisches Patentamt**
**European Patent Office**
**Office européen des brevets**

(11) **EP 3 161 009 B1**

(12) **EUROPEAN PATENT SPECIFICATION**

(45) Date of publication and mention
of the grant of the patent:
**29.07.2020 Bulletin 2020/31**

(21) Application number: **15812520.3**

(22) Date of filing: **23.06.2015**

(51) Int Cl.:
*C08B 15/06* (2006.01)          *C08B 16/00* (2006.01)
*D01C 1/00* (2006.01)           *D01F 2/28* (2006.01)
*D01F 1/10* (2006.01)           *D01F 2/24* (2006.01)

(86) International application number:
**PCT/IB2015/054696**

(87) International publication number:
**WO 2015/198218 (30.12.2015 Gazette 2015/52)**

(54) **METHOD FOR MAKING CELLULOSE CARBAMATE**

VERFAHREN ZUR HERSTELLUNG VON CELLULOSECARBAMAT

PROCÉDÉ PERMETTANT LA FABRICATION DE CARBAMATE DE CELLULOSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2014 SE 1450795**

(43) Date of publication of application:
**03.05.2017 Bulletin 2017/18**

(73) Proprietor: **Stora Enso Oyj**
**00101 Helsinki (FI)**

(72) Inventors:
• **SAXELL, Heidi**
**122 19 Stockholm (SE)**
• **RANTAMÄKI, Paula**
**131 71 Nacka (SE)**
• **EKMAN, Kalle**
**55120 Imatra (FI)**

(74) Representative: **Steinrud, Henrik et al**
**Stora Enso AB**
**Group Intellectual Property**
**Box 9090**
**65009 Karlstad (SE)**

(56) References cited:
**WO-A1-01/07485          WO-A1-03/064476**
**WO-A1-03/064476        WO-A1-2013/150475**
**DE-C1- 19 635 707       US-A- 5 831 076**
**US-A- 5 906 926          US-A1- 2005 107 602**
**US-A1- 2005 215 778     US-A1- 2005 234 229**

• FAHMY, T. ET AL.: 'Green nanotechnology: A
short cut to beneficiation of natural fibers' INT. J.
OF BIOLOG. MACROMOL. vol. 48, no. 1, 2011,
ISSN 0141-8130 pages 134 - 136, XP027564749
• EKMAN, K. ET AL.: 'Regenerated Cellulose Fibers
From Cellulose Carbamate Solutions'
LENZINGER BERICHTE 1984, pages 38 - 40,
XP055246877

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of invention**

The present invention relates to an efficient and sustainable method for manufacturing cellulose carbamate (CCA). Also the present invention relates to a cellulose carbamate obtainable by said method, a dope comprising the cellulose carbamate and use of said cellulose carbamate in processing cellulose fibres into regenerated shaped cellulose products, such as textile fibres, non-wovens and films. In particular, the present invention is related to the production of cellulose carbamate from never dried cellulose pulp. In the method, the never dried cellulose pulp is allowed to react with urea and an optionally also an auxiliary agent.

**Background**

Cellulose is the most abundant renewable biopolymer on the market. There are, however, obvious challenges in conversion of cellulose to higher end products as cellulose is not meltable or soluble in commonly used solvents. To overcome these disadvantages cellulose may be chemically modified by derivatization prior to conversion of the cellulose. The viscose process is a commercial example of a dissolution process going through a derivatization stage, i.e. alkalized cellulose is mixed with $CS_2$ in order to produce a metastable cellulose derivative called cellulose xanthate. The obtained cellulose xanthate is soluble in dilute alkali from which the dissolved cellulose can be regenerated in acidic baths to form typically fibres, films, membranes or sponges. The viscose process involves the use of hazardous reagents as well as by-products, including $CS_2$, $H_2S$ and heavy metals. There are thus continuous attempts to find alternative environmentally friendly processes to overcome these problems.

Only the so called Lyocell process has been a commercialized alternative and has been to some extent been able to challenge the viscose process. In the Lyocell process, cellulose is directly dissolved into N-methyl morpholine (NMMO) and then regenerated by coagulation in water. The process is advantageous as it does not contain hazardous chemicals and the achieved fibre is superior in tensile strength when compared to the viscose fibre. The drawbacks of the Lyocell process are mainly determined by the higher cost and safety issues. Also, the fibre properties do not match all applications where viscose based fibres are used.

Another potentially emerging technology for cellulose regeneration is the so called cellulose carbamate process.

The derivatization step of the cellulose carbamate technology is similar to the one used in the viscose technology. However, instead of making the alkali soluble xanthate derivative, a carbamate cellulose derivative is made as an intermediate step. Cellulose carbamate is, similar to xanthate, soluble in dilute alkali and can be shaped to new cellulose products by coagulation under acidic conditions. Unlike cellulose xanthate, cellulose carbamate is a more stable intermediate and can be stored for long periods prior to dissolution. This is a major benefit compared to the viscose process, where the cellulose xanthate has to be dissolved and further spun to fibre/film immediately after the start of the derivatization process. Also, the cellulose carbamate process is a more environmentally friendly method compared to the viscose process.

Despite the fact that cellulose carbamate technology has been under development for over decades and that there are numerous documented processes developed, it has still not been commercialized. The reasons are believed to deal with issues affecting the economy of the process, such as the problems in the recovery and residues of process chemicals or forming byproducts that are the result of poor reaction efficiencies (e.g. conversion of urea to carbamate groups) and need of high surpluses of urea in all of the so far proposed processes. Further problems reported for cellulose carbamate include the tendency of cellulose carbamate solutions to easily form gels that are not anymore spinnable to for example textile fibres.

The carbamation reaction itself is carried out at high temperatures (>130 °C), between urea and cellulose. Urea decomposes to ammonia and isocyanic acid in elevated temperatures and isocyanic acid reacts with the hydroxyl groups of cellulose forming cellulose carbamate (equations 1 and 2).

$$NH_2 - CO - NH_2 \rightarrow HN = C = O + NH_3 \qquad (1)$$

$$Cell - OH + HN = C = O \rightarrow Cell - O - C - NH_2 \qquad (2)$$

The existing methods used for the manufacture of cellulose carbamate use dry cellulose pulp and there is then a need to use a mercerization step as an activation step. In the mercerization step the dry cellulose pulp is first soaked in an alkaline solution to activate the pulp and to increase the accessibility of the crystalline regions to reagents. The mercerization step is a very alkali-, energy and time consuming process. After mercerization, cellulose is typically partly dewatered or dried by pressing and thereafter a so called ripening takes place during which the cellulose degrades to a wanted degree of polymerization (DP). After this DP adjustment, cellulose is treated and reacted with urea at elevated temperatures. The reaction may be carried out for example in an inert, organic solvent such as xylene or toluene.

In patent publications US2005/0054848 and FI112795B (VTT), a high solid technique/dry technique method for the production of cellulose carbamate has been described. In this technique dry cellulose pulp is mixed with auxiliary agent and urea under mechanical work at a high consistency and the reaction is thereafter carried out in an oven. The urea amounts needed to reach acceptable dopes exceed 30 wt-% of pulp amount.

When studying the above described dry technique in detail we have discovered that a major drawback of this method (as well as the other so far published methods) is the high urea dosages needed due to inefficient chemical mixing and poor conversion of urea to carbamate groups. This has direct implications on reaction efficiency, product costs in terms of urea, but also as additional process costs as the synthesis step needs to be followed by a separate washing step where the undesired byproducts are washed out prior to dissolution. The washing water has to be further treated either in a waste water plant or in a process where potential unreacted urea would have to be recovered and put back to the process. Furthermore, the overall quality in terms of solubility and solution stability of the cellulose carbamate produced according to the dry technique described e.g. in US2005/0054848 and FI112795B is questionable. This is seen in the following dissolution steps, where a NaOH solution with quite high concentration is needed in order to dissolve the carbamate and also that the cellulose carbamate solutions tend to form gels relatively easy, and thus, stability of the solution is decreased. This is a major drawback as this set challenges and limitations for the dissolution and regeneration process, making the process more vulnerable to the small deviations in the process conditions. The uneven and decreased quality of the cellulose carbamate product, produced by this dry-technique, is mainly due to uneven substitution of the carbamate groups. This is explained by the fact, that dry urea is mixed with dry cellulose and thus the diffusion of the urea into the cellulose fibre is limited. The only mixing phase of the chemicals and cellulose happens during the pelletizer press state, where the solid content is relatively high.

There is thus a need for a more environmentally sustainable process for the production of cellulose carbamate.

## Summary of Invention

The invention is set out in accordance with the appended claims.

It is an object of the present invention to provide an efficient and sustainable production process for making cellulose carbamate.

Another object of the present invention is to produce a dope and cellulose carbamate with improved solubility and stability of the solution.

These objects and other advantages are achieved by the present invention.

The present invention provides, according to a first aspect, a method for manufacturing cellulose carbamate comprising the following steps:

a) providing a never-dried pulp,
b) adding urea and an auxiliary agent which is an alkalizing agent and mixing said pulp with said urea and alkalizing agent wherein the urea is added using less than 20% weight relative to the pulp amount,
c) mechanically treating said mixture,
d) drying the mixture, and
e) heating the dried mixture at an elevated temperature at a range of from 130°C to 150°C thus providing a cellulose carbamate.

The present invention also provides according to a second aspect a dope comprising a cellulose carbamate produced according to the first aspect and an alkali hydroxide, such as sodium hydroxide and optionally additionally one or more additives. The sodium hydroxide may be dilute alkali hydroxide and may be of 5 to 9 wt-% NaOH solution

The present invention also provides according to a third aspect, the use of a dope according to the second aspect in the manufacture of regenerated cellulose materials, such as fibres (which may be used in textiles), films, beads, sponges, or filters or membranes. The cellulose carbamate may thus be used in fiber industry, film industry, nonwoven industry, sausage casing manufacturing, paper converters and filter manufacturing. Cellulose carbamate can also have antimicrobial activities.

## Detailed description of the invention

It has been found that by using never dried wood pulp a high reaction efficiency and sufficient degree of substitution of carbamate groups can be achieved with a low dosage of urea. Thus, the amount of unreacted urea and unwanted by-products can be substantially reduced, resulting in that for most applications, the cellulose carbamate product could be used as such, without the need of additional washing steps before the dissolution step. This is one of the major benefits with the present invention.

Another benefit with the present invention is that the quality of the produced cellulose carbamate is improved. This may be due to the more even substitution achieved when the urea is mixed with never dried cellulose pulp, i.e. non-hornificated fiber, thus before the drying step of the cellulose. Once cellulosic fibers are dried, the fibres change irreversibly their properties as the internal volume of the fibre shrink. This phenomenon is called hornification. Never-dried fibres are thus fibers that not have been dried, i.e. non-hornificated fibers.

Thus, by the use of never-dried pulp it has been found that the accessibility and diffusion of urea into the cellulose fibre has significantly increased. In addition, when never dried pulp is mechanically treated the crystallinity of the cellulose can be decreased. Decreased crystallinity means that the amorphous part of the cellulose fibers increases and this result in, that urea can be more evenly distributed among the cellulose fibers and thereby an improved product quality is achieved.

It is intended throughout the present description that the expression "cellulose carbamate" embraces any type of cellulose carbamate.

The never-dried (ND) cellulose pulp is preferably a virgin pulp and it may be bleached or unbleached. The never-dried cellulose pulp may be a chemical pulp, mechanical pulp, nanopulp, thermomechanical pulp or chemi(thermo)mechanical pulp (CMP or CTMP). Said chemical pulp is preferably a sulphite pulp or a kraft pulp.

The pulp may consist of pulp from hardwood, softwood or both types. The softwood may be pine, spruce, cedar, fir, larch, douglas-fir, hemlock, cypress, redwood, or yew. The hardwood may be birch, beech, eucalyptus, acacia, oak, ash, elm, aspen, poplar or maple. The pulp may further e.g. contain a mixture of pine and spruce or a mixture of birch and spruce. The chemical pulps that may be used in the present invention include all types of chemical wood-based pulps, such as bleached, half-bleached and unbleached sulphite, kraft and soda pulps, and mixtures of these. The pulp may be of dissolved type, which is preferred. Preferred is also a pulp where the alpha cellulose content is above 93 wt%. The pulp may also comprise textile fibers. The pulp may also come from agriculture (e.g. wheat, potato, bamboo or carrot).

The cellulose fibres (cellulose material) that may be used for making said cellulose carbamate may also be so-called nanocellulose or microfibrillated cellulose (MFC) or highly refined pulp or mixtures between normal pulp and highly refined fibers such as microfibrillated cellulose.

It is of essential importance, that the used pulp has not been dried or hornificated which thus substantially reduced the accessibility of urea to the fibers and fibrils.

The never-dried cellulose might be refined or cut in order to increase the surface area of the fiber and/or degree of fibrillation. The refining (or homogenization with microfibrillated cellulose) step might also be carried out in presence of urea or the auxiliary agents.

It is intended throughout the present description that the expression "dope" embraces any type of cellulose dope which is a solution of dissolved cellulose. Said cellulose may be modified, and may e.g. be cellulose carbamate.

According to the first aspect of the present invention the urea in step b) is added as solid or as a water solution, with an auxiliary agent.

According to the first aspect of the present invention the auxiliary agent is an alkalizing agent, such as an alkalizing metal hydroxide, preferably sodium hydroxide or magnesium hydroxide, and/or ammonia and/or hydrogen peroxide, and/or one or more enzymes. The hydrogen peroxide, may preferably be added, with the use of never dried dissolving grade pulp with a degree of polymerization of between 500-800, with 0.3 to 1 w-% of $H_2O_2$. The auxiliary agent may be added in order to decrease the degree of polymerization of the pulp.

According to the first aspect of the present invention the urea added in step b), is added using less than 20 % of urea by weight relative to the pulp amount, more preferred less than about 15 %, most preferred less than 10 %, especially preferred less than 5 %. It has been shown that a low urea dosage is sufficient to add to never dried pulp and still be able to produce carbamate.

According to preferred embodiment of the first aspect of the present invention the mixing of said pulp and said urea in step b) is performed in a mixture where the total solids content is less than about 50 wt%, preferably below 40 wt% and most preferably from about 15 to about 35 wt%. It has been found that it is possible to get a more homogeneous mixing of the pulp and the urea and the urea is more evenly distributed in the pulp if the solid content of the pulp is less than 50 wt%. Too high solid content makes it difficult to mix the fibers and the urea in a good way.

According to preferred embodiment of the first aspect of the present invention the never-dried pulp of step a) is pre-treated mechanically to induce fibrillation or to increase the surface area of the fibres, by beating, milling, or kneading, or preferably via extrusion. By mechanically pre-treating the never dried pulp before addition of urea the reaction between urea and the cellulosic fibers may be improved and facilitated.

According to preferred embodiment of the first aspect of the present invention the never-dried pulp of step a) is pre-treated mechanically to reduce the crystallinity, by beating, kneading, compounding or milling preferably by ball milling. By pre-treating the never dried pulp in order to reduce the crystallinity of the fibers the reaction between the urea and the fibers of the pulp is improved.

According to preferred embodiment of the first aspect of the present invention the mechanical treatment in step c) and/or the mechanical pre-treatment of the never dried pulp in a) is such that the crystallinity of cellulose is reduced significantly, preferably below 50 %, more preferably below 30 % and most preferred below 20 %.

According to preferred embodiment of the first aspect of the present invention the mechanical treatment of step c) is carried out for a period of less than 2 hours, preferably less than 1 hour and most preferred less than 0.5 hours.

According to preferred embodiment of the first aspect of the present invention the temperature of the mixture of step c) is controlled and kept below about 80°C during the mechanical treatment. It is important that the temperature during the mechanical treatment is not too high since the reaction between the added urea and the cellulosic fibers might occur too soon and also the hornification effects can be minimized by temperature control. The temperature during the mechanical treatment in step c) may be controlled by using a cooling system which preferably is a system adapted for the mechanical treatment.

According to preferred embodiment of the first aspect of the present invention the mechanical treatment in step c) is carried out within reactors or machines equipped with efficient mixing elements, such as shovel mixers, ball mills, sieve plate presses, compounders, roller press, extruders and kneaders and mills.

According to preferred embodiment of the first aspect of the present invention the mechanical treatment in step c) involves mechanical mixing and/or shearing and/or grinding, wherein simultaneously drying or dewatering of the water is involved. It is thus possible to dry or dewater the pulp in the mechanical treatment step c) as well. Thus, the subsequent drying step may be less energy consuming since the pulp to be dried has an increased dry content.

According to preferred embodiment of the first aspect of the present invention the drying of the mixture of step d) is carried out to a solid content of at least 70 wt% and at a temperature of below 100°C, most preferred below 90°C, especially preferred below 80°C, especially particularly preferred below 60°C. During the drying water is removed from the pulp which is necessary in order for the reaction in the subsequent heating treatment in step e) to occur in an efficient way. The drying in step d) may be carried out in a vacuum drier or a fluid bed drier.

According to preferred embodiment of the first aspect of the present invention mechanical treatment is performed in addition to step c) also during or after the drying step d) and before or during step e). If a mechanical treatment is carried out after the drying step d) the dry content of the pulp may increase further which makes it possible to reduce the drying in step d) and still be able to produce a pulp with sufficient dry content in order for the carbamate reaction to be efficient.

According to the first aspect of the present invention the reaction that occurs during the heat treatment in step e) is performed at an elevated temperature at a range of from 130°C to 150°C.

According to preferred embodiment of the first aspect of the present invention the heat treatment in step e) is done for a period of at least 0.5 hours, preferably for about 1 to about 3 hours.

According to preferred embodiment of the first aspect of the present invention the total solid content of the pulp to be heat treated in step e) is above 80 wt%, preferably above 90 wt% and even more preferably above 95 wt%. It is important that the pulp to be heat treated in step e) has a sufficiently high solid content. Too much water present during the heat treatment will make the reaction to form carbamate that occurs in the heat treatment step less efficient.

According to preferred embodiment of the first aspect of the present invention the $NH_3$ formed during the reaction steps is removed from the reaction chamber, preferably using flushing with inert gas, such as $N_2$.

According to preferred embodiment of the first aspect of the present invention the cellulose carbamate obtained in step e) is dissolved in an auxiliary agent, preferably an alkalizing agent, most preferred alkali hydroxide, such as sodium hydroxide (NaOH).

According to preferred embodiment of the first aspect of the present invention the degree of polymerization of the cellulose backbone is reduced and/or adjusted before, during or after the addition of urea in step c) by: i) oxidation with an oxidation agent, such as $H_2O_2$, ii) alkali hydroxide treatment such as using NaOH and/or iii) enzymatic treatment.

The carbamate produced according to the method described above has been found to have improved solubility which means that it is possible to dissolve a higher amount of carbamate in a solution. It has been found that it is even possible to dissolve a larger amount of carbamate in an even more diluted sodium hydroxide solution compared to carbamate produced from dried pulp. Furthermore, the carbamate according to the present invention is soluble at a lower DS-level compared to carbamate produced from dried pulp. Also, the purity of the carbamate produced from never dried pulp according to the present invention is purer, i.e. it comprises less chemical impurities such as unreacted urea and by-products, compared to carbamate produced from dried pulp.

According to preferred embodiment of the second aspect of the present invention the additive is a metal oxide, such as zinc oxide. In the dope a solution of CCA (4 to 10 w-% of CCA) may be made in dilute NaOH water solution (NaOH concentration in between 5 and 9 w-% and with or without 0.5-1.5 w-% of additives such as ZnO) and this dope may be used to make regenerated materials, such as fibres, films, beads, sponges etc. by precipitation in acidic water solutions. In addition, the regenerated CCA materials may be used in different end applications such as textile production etc. The carbamate groups may also be cleaved off and pure cellulosic regenerated products may be made by a treatment of the regenerated CCA materials in dilute alkaline conditions at temperatures above 80 degrees Celsius. The pure cellulose material is chemically similar to viscose and Lyocell material. Thus, another advantage with the present invention is that it is, starting from cellulose carbamate, possible to produce end-products containing either the pure cellulose material, i.e. unfunctionalized cellulose, or cellulose material containing carbamate groups. Depending on the wanted product properties and application it may be advantageous to use either the pure cellulose material or the carbamated cellulose material.

Thus, the present invention provides a method for production of cellulose carbamate, where cellulose is treated with urea under elevated temperatures. The process is solvent-free and environmentally liable, where the benefits arise from the use of never dried cellulose compared to the use of dried pulp. When starting with never dried cellulose pulp with a consistency of less than 50 wt% and then adding the needed chemicals (i.e. urea and auxiliary agent/s) a mixture of high homogeneity can be achieved. The homogeneity can further be improved by choosing the mechanical treatment in step c) to be such that the crystallinity of the cellulose is decreased, improving the penetration of the chemicals into the crystalline and semi-crystalline areas of the cellulose fibres and further, providing a significantly higher reaction efficiency and a more even substitution to the product. By improving the eveness of the substitution, the product is soluble in lower NaOH concentrations resulting in savings in dope preparation and regeneration as less acid is used in coagulation baths.

Since the reaction efficiency is significantly increased, the need for washing and waste water treatment steps is reduced. In the cases that no washing is needed of the cellulose carbamate prior to dissolution, a simplified and more environmentally sustainable process is obtained. In case that a washing step is needed, it is clear that in comparison to previous processes a smaller amount of unreacted urea is left in the waters, which is a great benefit. Both the need for less or no washing after making the carbamate and the need for less acid will contribute to a sustainable process, making it much less dependent on fresh water. For most applications, the product may be used as such, without the washing step. Improved product quality resulting from more even substitution is manifested especially in the following dissolution process, e.g. in terms of the improved stability of the solution, which gives significant benefits and flexibility in the following production and processing steps.

The advantages of the present invention are as already mentioned:
Never dried cellulose can be used in the process instead of dry cellulose leading to clear overall energy savings as one drying step as well as cellulose dry milling step can be skipped. As a result from using a never-dried fiber, a more homogenous urea/cellulose mixture is obtained which leads to the fact that the reaction efficiency of the carbamation reaction is greatly improved and the product quality is higher. This is seen as less waste creation in the process and better quality of the product (solubility in alkali and stability of solution).

Lower chemical needs, lower amounts of produced by-products resulting in that the waste-water treatment need is smaller and decrease in the production time compared to viscose, as highly time- and energy-consuming steps, such as ripening/aging (even 40 h) can be passed in the carbamate process.

The method according to the first aspect may also be carried out in an open reaction vessel (if not mixing simultaneously), so that the produced ammonia gases are effectively purged away from the reaction chamber/oven. The reaction can be carried out in a Lodige-type reactor or similar, where effective mixing is possible to be carried out simultaneously with the reaction. The method involving the the carbamate reaction itself may be carried out in an oven, in a microwave oven, in a reactor and where simultaneous mixing may be used.

As set out earlier it has been found that significant improvements to the reaction efficiency and product quality can be achieved by pre-mixing urea and auxiliary agent to never dried cellulose under mechanical work before drying.

The use of never dried cellulose and the concept, where the chemical mixing is done before drying, results in better chemical diffusion into the fibre. Mechanical work and pre-mixing can be carried out in an extruder, kneader, compressor, sieve press, a roll mixer, ball mills, and in devices, where shearing and mixing is possible. The mechanical work homogenizes the mixture, activates the fibre, increases the penetration of the chemicals into the fibre and decreases the degree of polymerization. In addition, mechanical work also decreases the crystallinity of the cellulose thereby increasing the amorphous part of the cellulose. It is known that chemicals penetrate amorphous part more easily compared to crystalline part. As a result, better distribution of the chemicals to the fibres is achieved, further affecting more even degree of substitution.

As set out earlier an auxiliary agent may be an alkalizing agent, such as metal hydroxide (e.g. NaOH, Mg(OH)2) or ammonia, hydrogen peroxide or enzymes. Auxiliary agent may be added before urea or at the same time or after urea. The auxiliary agent may be in solid or in liquid form or both. It is also possible to use several auxiliary agents at the same time. It is also possible to add the auxiliary agent and urea in several steps during pre-mixing and drying. Urea may be added in the form of solid or liquid or mixed with liquid auxiliary agent.

A drying step that comprises of evaporation of water is followed after mixing and mechanical treatment, and can be carried out in a reactor or a vacuum dryer or a similar apparatus for further increase the solids content. Mechanical mixing can be used simultaneously with drying. Drying may be carried out for example in a fluidized bed dryer.

After the concentration/drying step, the relatively dry mixture may be further treated with mechanical device in order to improve further the homogeneity of the mixture. This phase is basically the same, where the mechanical working starts according to the FI112795 B patent, where dry cellulose is used instead of never dried. Mechanical treatment may include pelletizer press, where the impregnation of the chemicals to the fibre is further improved and the crystallinity can be decreased.

The carbamate reaction that occurs in the heat treatment step e) may be carried out in an oven, microwave-oven or a reactor, i.e. steam, electricity and radiation energy may be used for the heating. Mixing can be used simultaneously which improves the thermal flow of the heat to the cellulose material. Cellulose itself is very poor material to conduct heat and thereby mixing simultaneously with the heating is a benefit.

The needed cellulose carbamate product quality in terms of degree of substitution, homogeneity and degree of polymerisation differ from one application to another and for example a lower clarity and filterability of cellulose carbamate solution is needed for sausage casings compared to for example high tenacity fibres.

Preferred features of each aspect of the invention are as for each of the other aspects mutatis mutandis. The invention is further described in the following examples, together with the appended figures, the only purpose of which is to illustrate the invention and are in no way intended to limit the scope of the invention in any way.

### Figures

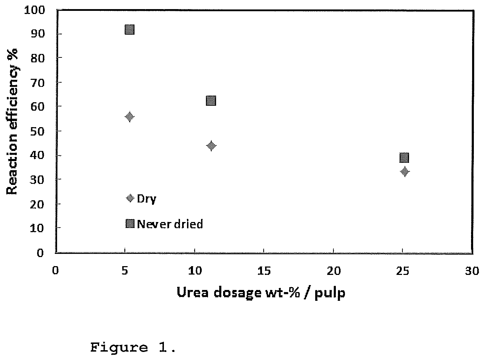

Figure 1 discloses the improved efficiencies achieved with the use of smaller urea dosages.

### Example 1

The differences in the carbamate process between dried and never dried pulp was examined. The used never dried pulp was taken directly from the pulp mill at ∼8 % consistency and centrifuged to solid content of ∼35 %. The dried samples were treated in the following way: the dry cellulose sheets were suspended with water over night and on the following day disintegrated with a cellulose pulper and centrifuged. The solid content of the so-treated pulp was 41 %.

The pulp (375 g abs dry) was added to the reactor. Urea and hydrogen peroxide were added to the mixture, carefully one after another at the same time as mixing of the cellulose in the Lödige DVT-7 mechanical fluid bed type reactor occurred. The mixing lasted ca. 60 min. The solid content of the mixture was adjusted to 25 % by adding the extra RO-water (purified with standard method using reverse osmosis) with urea and hydrogen peroxide. This was followed by vacuum drying at a temperature of 50 - 60 °C under mixing. The mixture was dried until the solid content was ca. 75 - 85 %. The recipes and parameters of the experiments are shown in Table 1.

**Table 1.** Experiments and chemical recipes used for the CCA-synthesis.

| sample | Solid content of the cellulose (w-%) | Urea dosage (w-% based on pulp) |
|---|---|---|
| ND 1 | 35 | 25.1 |
| ND 2 | 35 | 11.2 |
| ND 3 | 35 | 5.3 |
| | | |
| Dried 1 | 41 | 25.1 |
| Dried 2 | 41 | 11.2 |
| Dried 3 | 41 | 5.3 |

After mixing, the samples were put in an oven on open trays. The oven was air blast, removing the produced ammonia gases effectively. The temperature was 140 °C and the reaction time was 4h. After the reaction, the samples were suspended in water and the pH-level was measured to be in the range of 6 - 7,5. The suspended sample was filtered off on a Büchner-funnel and further washed several times (3-5x) with hot tap-water/RO-water and finally with RO-water. The nitrogen content (N-content) of the washed samples was thereafter analysed.

It is reflected in Table 2, that there significant differences in the achieved N-contents, i.e. in the degree of substitution between the reactions carried out with dry pulp or never dried pulp.

Degree of substitution (DS) determines how many functional groups there are on average attached to one anhydroglucose unit of the cellulose. Cellulose anhydroglucose unit contains three hydroxyl groups determining the maximum DS to be 3. Typically the DS values of NaOH-soluble cellulose carbamate are reported to be in the range of 0,2 to 0,3.

The reaction efficiency is calculated by first calculating the DS value from the received N-value according to the equation:

$$DS = \frac{162 \times N}{14 - 43 \times N}$$

The theoretical amount of needed isocyanic acid to achieve a certain DS level can be calculated based on the DS value of the cellulose carbamate and the amount of cellulose, according to the following equation:

$$n(isocyanic\ acid) = DS * n(cellulose\ anhydroglucose\ unit)$$

It is assumed, that urea decomposes totally to ammonia and isocyanic acid, and further assumed that all produced isocyanic acid reacts with cellulose OH-groups (i.e. 1 mol of urea produces 1 mol of isocyanic acid), we get then directly the minimum urea dosage.

The efficiency of the conversion of urea to isocyanic acid and further carbamate groups is calculated by dividing the amount of reacted urea with the fed urea dosage.

The reaction efficiency is significantly increased, when never dried pulp is used. In addition, the reaction efficiency increases with smaller urea dosages.

**Table 2.** CCA-reaction conditions and analysed results.

| Pulp | Urea-% from pulp | N-% | DS | n(isocyanate acid) [mol] | n(urea) [mol] | Efficiency -% |
|---|---|---|---|---|---|---|
| ND 1 | 25.1 | 2.13 | 0.26 | 0.61 | 1.56 | **39** |
| ND 2 | 11.2 | 1.54 | 0.19 | 0.43 | 0.70 | **62** |
| ND 3 | 5.3 | 1.09 | 0.13 | 0.30 | 0.33 | **91** |
| | | | | | | |
| Dried 1 | 25.1 | 1.84 | 0.23 | 0.52 | 1.56 | **33** |
| Dried 2 | 11.2 | 1.11 | 0.13 | 0.31 | 0.70 | **44** |
| Dried 3 | 5.3 | 0.68 | 0.08 | 0.19 | 0.33 | **56** |

The results are also illustrated in Figure 1. It can be seen from Figure 1 that the reaction efficiency for never dried pulp is much better compared to the dried pulp samples. It can also be concluded that it is much more efficient to use low urea dosages for never dried pulp compared to dried pulp.

**Example 2**

Two different samples were prepared. One comprising dried pulp 2a) and one comprising never dried pulp 2b).

2a) The dried pulp sample was mixed with solid urea (particle size ~5mm) and small amount of aqueous peroxide in a mechanical fluid bed batch mixer (Forberg-mixer) in a way that the consistency before the following mechanical work in a compounding step was ca. 70 wt-%. The compounding was done in the same was as described in FI112795B. After the compounding step, the mixture was put in an oven (140 °C) for 4 hours in order for the carbamate reaction to occur.

2b) The never dried pulp had a consistency of 20 wt% when urea was slowly poured as aqueous solution during mixing to a Druvatherm mixer and further mixed with the pulp. The mixture was dried under mild conditions (temperature <80 °C) to a consistency of ca. 90 wt-%. A small amount of aqueous peroxide was thereafter added to the mixture similar to the procedure in 2a) in the same mixer so that the consistency of the mixture was ca. 70 wt-%. The mixture was thereafter mechanically treated in the compounding step in the same was the sample 2a) followed by the reaction step under the same conditions as for the dried pulp sample described above in example 2a).

Table 3. Results of the dissolution and purity of the carbamate produced.

| Sample | Urea dosage (wt% from pulp) | DP | N content (%) | DS | Purity (%) | Dissolved CCA (%) | Concentration of dissolving solution NaOH/ZnO (%) |
|---|---|---|---|---|---|---|---|
| 2a | 25 | 240 | 1.25 | 0.15 | 83 | 6 | 9.7/1.3 |
| 2b | 11 | 290 | 0.95 | 0.11 | 95 | 6.5 | 7.5/1.0 |

It can be seen from Table 3 that there are many advantages with the use of never dried pulp. When using never dried pulp smaller amounts of urea can be used but it is still possible to get the desired DS-value.

In addition, the improved quality of the produced carbamate can also be seen in the following dissolution step, i.e. the amount of cellulose carbamate that is dissolved is higher even though the content of NaOH/ZnO is lower. This means that the content of cellulose carbamate in a solution can increase at a lower chemical dosage, which has a significant effect on the process economy.

Furthermore, the purity of the produced carbamate was veryg high, much higher than the carbamate from the dried pulp, resulting in that the product could be used in many applications as such, without further purification step.

In view of the above detailed description of the present invention, other modifications and variations will become apparent to those skilled in the art. However, it should be apparent that such other modifications and variations may be effected without departing from the scope of the invention.

**Claims**

1. Method for manufacturing cellulose carbamate comprising the following steps:

   a) providing a never-dried pulp,
   b) adding urea and an auxiliary agent which is an alkalizing agent and mixing said pulp with said urea and alkalizing agent wherein the urea is added using less than 20% by weight relative to the pulp amount,
   c) mechanically treating said mixture,
   d) drying the mixture, and
   e) heating the dried mixture at an elevated temperature at a range of from 130°C to 150°C thus providing a cellulose carbamate.

2. The method according to claim 1, wherein the alkalizing agent is an alkalizing metal hydroxide.

3. The method according to any one of the preceding claims, wherein the urea is added in step b) using less than 15 % by weight relative to the pulp amount.

4. The method according to any one of the preceding claims , wherein the never-dried pulp of step a) is pre-treated mechanically, by beating, milling, kneading, or via extrusion.

5. The method according to any one of the preceding claims , wherein the never-dried pulp of step a) is pre-treated mechanically to reduce crystallinity, by beating, milling, kneading, or compounding.

6. The method according to any of the preceding claims, wherein the mechanical treatment in step c) and/or the mechanical pre-treatment is such that the crystallinity of cellulose is reduced significantly.

7. The method according to any one of the preceding claims, wherein the mixing of said pulp and said urea in step b) is performed in a mixture where the total solids content is less than 50 wt%.

8. The method according to any one of the preceding claims, wherein the mechanical treatment of step c) is carried out for a period of less than 2 hours.

9. The method according to any one of the preceding claims, wherein the temperature of the mixture of step c) is controlled and kept below 80°C during the mechanical treatment.

10. The method according to any one of the preceding claims, wherein the mechanical treatment in step c) is carried out within reactors or machines equipped with efficient mixing elements.

11. The method according to any of the preceding claims, wherein the mechanical treatment in step c) involves mechanical mixing and/or shearing and/or grinding, wherein simultaneously drying or dewatering of the water is involved.

12. The method according to any one of the preceding claims, wherein the drying of the mixture of step d) is carried out to a solid content of at least 70 wt%, and at a temperature below 100°C.

13. The method according to any of the preceding claims, wherein the drying in step d) is carried out in a vacuum drier or a fluid bed drier.

14. The method according any one of the preceding to claims 1, wherein a mechanical treatment is performed in addition to step c) also during or after the drying step d) and/or before or during step e).

15. The method according to any one of the preceding claims, wherein the heat treatment in step e) is done for a period of at least 0.5 hours.

16. The method according to any of the preceding claims wherein the total solid content of the pulp to be heat treated in step e) is above 80 wt%.

17. The method according to any one of the preceding claims, wherein the $NH_3$ formed during the heat treatment in step e) is removed from the reaction chamber.

18. The method according to any of the preceding claims, wherein the cellulose carbamate obtained is step e) is dissolved in an auxiliary agent).

19. The method according to any one of the preceding claims, wherein the degree of polymerization of the cellulose backbone is reduced and/or adjusted before, during or after the addition of urea in step c) by: i) oxidation with an oxidation agent ii) alkali hydroxide treatment and/or iii) enzymatic treatment.

20. A dope comprising a cellulose carbamate produced according to any of the claims 1-19 and an alkali hydroxide and optionally additionally one or more additives.

21. A dope according to claim 20 wherein the additive is a metal oxide, such as zinc oxide.

22. Use of a dope according to claim 20 or 21 in the manufacture of regenerated materials.

**Patentansprüche**

1. Verfahren zur Herstellung von Cellulosecarbamat, die folgenden Schritte umfassend:

   a) Bereitstellen eines nie getrockneten Zellstoffs,
   b) Zugeben von Harnstoff und einem Hilfsstoff, der ein Alkalisierungsmittel ist, und Mischen des Zellstoffs mit dem Harnstoff und dem Alkalisierungsmittel, wobei der Harnstoff unter Verwendung von weniger als 20 Gew.-%, bezogen auf die Zellstoffmenge, zugegeben wird,
   c) mechanisches Behandeln der Mischung,
   d) Trocknen der Mischung, und
   e) Erhitzen der getrockneten Mischung bei einer erhöhten Temperatur im Bereich von 130 °C bis 150 °C, wodurch ein Cellulosecarbamat bereitgestellt wird.

2. Verfahren nach Anspruch 1, wobei das Alkalisierungsmittel ein alkalisierendes Metallhydroxid ist.

3. Verfahren nach einem der vorhergehenden Ansprüche, wobei der Harnstoff in Schritt b) unter Verwendung von weniger als 15 Gew.-%, bezogen auf die Zellstoffmenge, zugegeben wird.

4. Verfahren nach einem der vorhergehenden Ansprüche, wobei der nie getrocknete Zellstoff aus Schritt a) durch Schlagen, Mahlen, Kneten oder durch Extrusion mechanisch vorbehandelt wird.

5. Verfahren nach einem der vorhergehenden Ansprüche, wobei der nie getrocknete Zellstoff aus Schritt a) durch Schlagen, Mahlen, Kneten oder Compoundieren mechanisch vorbehandelt wird, um Kristallinität zu verringern.

6. Verfahren nach einem der vorhergehenden Ansprüche, wobei die mechanische Behandlung in Schritt c) und/oder die mechanische Vorbehandlung derart ist, dass die Kristallinität von Cellulose deutlich verringert wird.

7. Verfahren nach einem der vorhergehenden Ansprüche, wobei das Mischen des Zellstoffs und des Harnstoffs in Schritt b) in einer Mischung durchgeführt wird, deren Gesamtfeststoffgehalt weniger als 50 Gew.-% beträgt.

8. Verfahren nach einem der vorhergehenden Ansprüche, wobei die mechanische Behandlung aus Schritt c) für einen Zeitraum von weniger als 2 Stunden durchgeführt wird.

9. Verfahren nach einem der vorhergehenden Ansprüche, wobei die Temperatur der Mischung aus Schritt c) während der mechanischen Behandlung geregelt und unter 80 °C gehalten wird.

10. Verfahren nach einem der vorhergehenden Ansprüche, wobei die mechanische Behandlung in Schritt c) innerhalb von Reaktoren oder Maschinen durchgeführt wird, die mit effizienten Mischelementen ausgestattet sind.

11. Verfahren nach einem der vorhergehenden Ansprüche, wobei die mechanische Behandlung in Schritt c) mechanisches Mischen und/oder Scheren und/oder Schleifen beinhaltet, wobei gleichzeitiges Trocknen oder Entwässern des Wassers involviert ist.

12. Verfahren nach einem der vorhergehenden Ansprüche, wobei das Trocknen der Mischung aus Schritt d) bis zu einem Feststoffgehalt von mindestens 70 Gew.-% und bei einer Temperatur unter 100 °C durchgeführt wird.

13. Verfahren nach einem der vorhergehenden Ansprüche, wobei das Trocknen in Schritt d) in einem Vakuumtrockner oder einem Wirbelschichttrockner durchgeführt wird.

14. Verfahren nach einem der vorhergehenden Ansprüche, wobei zusätzlich zu Schritt c), auch während oder nach dem Trocknungsschritt d) und/oder vor oder während Schritt e), eine mechanische Behandlung durchgeführt wird.

15. Verfahren nach einem der vorhergehenden Ansprüche, wobei die Wärmebehandlung in Schritt e) für einen Zeitraum von mindestens 0,5 Stunden erfolgt.

16. Verfahren nach einem der vorhergehenden Ansprüche, wobei der Gesamtfeststoffgehalt des in Schritt e) wärmezubehandelnden Zellstoffs mehr als 80 Gew.-% beträgt.

17. Verfahren nach einem der vorhergehenden Ansprüche, wobei das während der Wärmebehandlung in Schritt e) gebildete $NH_3$ aus der Reaktionskammer entnommen wird.

18. Verfahren nach einem der vorhergehenden Ansprüche, wobei das in Schritt e) erhaltene Cellulosecarbamat in einem Hilfsstoff gelöst wird.

19. Verfahren nach einem der vorhergehenden Ansprüche, wobei der Polymerisationsgrad des Celluloserückgrats vor, während oder nach der Zugabe von Harnstoff in Schritt c) durch: i) Oxidation mit einem Oxidationsmittel, ii) Alkalihydroxidbehandlung und/oder iii) enzymatische Behandlung verringert und/oder eingestellt wird.

20. Spinnlösung, umfassend ein Cellulosecarbamat, hergestellt gemäß einem der Ansprüche 1-19, und ein Alkalihydroxid und gegebenenfalls zusätzlich einen oder mehrere Zusatzstoffe.

21. Spinnlösung nach Anspruch 20, wobei der Zusatzstoff ein Metalloxid, wie Zinkoxid, ist.

22. Verwendung einer Spinnlösung nach Anspruch 20 oder 21 bei der Herstellung von regenerierten Materialien.

**Revendications**

1. Procédé de fabrication de carbamate de cellulose comprenant les étapes suivantes :

a) la fourniture d'une pulpe jamais séchée,

b) l'ajout d'urée et d'un agent auxiliaire qui est un agent alcalinisant et le mélange de ladite pulpe avec lesdits urée et agent alcalinisant dans lequel l'urée est ajoutée à l'aide de moins de 20% en poids par rapport à la quantité de pulpe,

c) le traitement mécanique dudit mélange,

d) le séchage du mélange, et

e) le chauffage du mélange séché à une température élevée dans une plage comprise entre 130° et 150°C, fournissant ainsi un carbamate de cellulose.

2. Procédé selon la revendication 1, dans lequel l'agent alcalinisant est un hydroxyde de métal alcalinisant.

3. Procédé selon l'une quelconque des revendications précédentes, dans lequel l'urée est ajoutée à l'étape b) à l'aide de moins de 15% en poids par rapport à la quantité de pulpe.

4. Procédé selon l'une quelconque des revendications précédentes, dans lequel la pulpe jamais séchée de l'étape a) est prétraitée mécaniquement, par battage, broyage, malaxage ou par extrusion.

5. Procédé selon l'une quelconque des revendications précédentes, dans lequel la pulpe jamais séchée de l'étape a) est prétraitée mécaniquement pour réduire la cristallinité, par battage, broyage, malaxage ou par mélange.

6. Procédé selon l'une quelconque des revendications précédentes, dans lequel le traitement mécanique lors de l'étape c) et/ ou le prétraitement mécanique est tel que la cristallinité de la cellulose est réduite de manière significative.

7. Procédé selon l'une quelconque des revendications précédentes, dans lequel le mélange de ladite pulpe et de ladite urée lors de l'étape b) est effectué dans un mélange où le contenu de solides total est inférieur à 50% en poids.

8. Procédé selon l'une quelconque des revendications précédentes, dans lequel le traitement mécanique de l'étape c) est effectué pendant une période de moins de 2 heures.

9. Procédé selon l'une quelconque des revendications précédentes, dans lequel la température du mélange de l'étape c) est contrôlée et maintenue en dessous de 80°C durant le traitement mécanique.

10. Procédé selon l'une quelconque des revendications précédentes, dans lequel le traitement mécanique lors de l'étape c) est effectué dans des réacteurs ou des machines équipés d'éléments de mélange efficaces.

11. Procédé selon l'une quelconque des revendications précédentes, dans lequel le traitement mécanique lors de l'étape c) implique un mélange mécanique et/ ou un cisaillement et/ ou un broyage, dans lequel simultanément un séchage ou une déshydratation de l'eau est impliqué.

12. Procédé selon l'une quelconque des revendications précédentes, dans lequel le séchage du mélange de l'étape d) est effectué sur un contenu solide d'au moins 70% en poids, et à une température inférieure à 100°c.

13. Procédé selon l'une quelconque des revendications précédentes, dans lequel le séchage lors de l'étape d) est effectué dans un séchoir sous vide ou un séchoir à lit fluidisé.

14. Procédé selon l'une quelconque des revendications précédentes selon les revendications 1, dans lequel un traitement mécanique est effectué en plus de l'étape c) également durant ou après l'étape de séchage d) et/ ou avant ou durant l'étape e).

15. Procédé selon l'une quelconque des revendications précédentes, dans lequel le traitement thermique lors de l'étape e) est effectué pendant une période d'au moins 0,5 heure.

16. Procédé selon l'une quelconque des revendications précédentes, dans lequel le contenu solide total de la pulpe à traiter par la chaleur à l'étape e) est supérieur à 80% en poids.

17. Procédé selon l'une quelconque des revendications précédentes, dans lequel le $NH_3$ formé durant le traitement thermique à l'étape e) est retiré de la chambre de réaction.

**18.** Procédé selon l'une quelconque des revendications précédentes, dans lequel le carbamate de cellulose obtenu à l'étape e) est dissous dans un agent auxiliaire).

**19.** Procédé selon l'une quelconque des revendications précédentes, dans lequel le degré de polymérisation du squelette de cellulose est réduit et/ ou ajusté avant, durant ou après l'ajout d'urée à l'étape c) par : i) oxydation avec un agent d'oxydation ii) traitement à l'hydroxyde alcalin et/ ou iii) traitement enzymatique.

**20.** Dope comprenant un carbamate de cellulose produit selon l'une quelconque des revendications 1-19 et un hydroxyde alcalin et éventuellement en plus un ou plusieurs additifs.

**21.** Dope selon la revendication 20, dans lequel l'additif est un oxyde métallique, tel que l'oxyde de zinc.

**22.** Utilisation d'un dope selon la revendication 20 ou 21 dans la fabrication de matériaux régénérés.

Figure 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050054848 A

- FI 112795 B